# EUROPEAN PATENT SPECIFICATION

(11) **EP 4 180 643 B1**
(45) Date of publication and mention of the grant of the patent: **22.10.2025**
(21) Application number: 21855742.9
(22) Date of filing: 06.10.2021
(51) Int. Cl.: F02P 5/04, F02P 13/00, F02P 15/00, F02B 19/04, F02B 19/12, F02F 3/26

(54) **ENGINE SYSTEM AND CONTROL METHOD FOR INTERNAL COMBUSTION ENGINE**
MOTORSYSTEM UND STEUERUNGSVERFAHREN FÜR EINEN VERBRENNUNGSMOTOR
SYSTÈME DE MOTEUR ET PROCÉDÉ DE COMMANDE POUR MOTEUR À COMBUSTION INTERNE

(30) Priority: 11.08.2020 JP 2020135842
(43) Date of publication of application: 17.05.2023
(73) Proprietor: Isuzu Motors Limited, Tokyo 140-8722 (JP)
(72) Inventor: TOKUNAGA, Motohisa, Fujisawa-shi, Kanagawa 252-0881 (JP)
(74) Representative: Meissner Bolte Partnerschaft mbB
(86) International application number: PCT/IB2021/059146
(87) International publication number: WO 2022/034566

(56) References cited:
- FR-A- 690 119
- FR-A- 690 119
- FR-A1- 2 939 842
- JP-A- 2003 120 298
- JP-A- 2003 120 298
- JP-A- 2007 285 273
- JP-A- S5 669 417
- JP-A- S5 669 417
- JP-A- S57 146 015
- US-B2- 9 810 167
- DOGGETT WILLIAM ET AL: "Measuring Internal Combustion Engine In-Cylinder Pressure with LabVIEW", 11 November 1998 (1998-11-11), XP093104818, Retrieved from the Internet <URL:https://www.ni.com/pdf/csma/us/361574a1.pdf> [retrieved on 20231123]

## Description

### TECHNICAL FIELD

The present disclosure relates to an engine system including an internal combustion engine and a control unit, and a control method for the internal combustion engine.

### BACKGROUND ART

In general, in a spark-ignition internal combustion engine, ignition is performed at a timing immediately before a compression top dead center, and an in-cylinder pressure peak is obtained at a timing immediately after the compression top dead center. Then, by advancing the ignition timing, the in-cylinder pressure peak value is increased, and an output torque of the engine is increased.

There is also known a spark-ignition internal combustion engine having an auxiliary combustion chamber in addition to a normal combustion chamber formed in a cylinder (see, for example, Patent Literature 1).

### CITATION LIST

### PATENT LITERATURE

Patent Literature 1: JP2007-285273A
Patent literature 2: FR 690 119 A
Patent literature 3: JP S5669417 A

### SUMMARY OF INVENTION

### TECHNICAL PROBLEM

In a general spark-ignition internal combustion engine, since the in-cylinder pressure peak occurs at a timing immediately after the compression top dead center, the in-cylinder pressure peak occurs at a timing at which the mechanical efficiency at the time of converting an in-cylinder pressure into a torque of a crankshaft is not necessarily good. Therefore, even if the ignition timing is advanced to increase the in-cylinder pressure peak value, the torque converted to the crankshaft does not increase so much, making it difficult to improve the thermal efficiency of the internal combustion engine.

Therefore, the present invention has been made in view of such circumstances, and an object of the present invention is to provide an engine system and a control method for an internal combustion engine that are advantageous in improving the thermal efficiency of the internal combustion engine.

### SOLUTION TO PROBLEM

According to one illustrative aspect of the present invention, an engine system includes: an internal combustion engine; and a control unit. The internal combustion engine includes: a main chamber defined by a piston, a cylinder and a cylinder head; a spark plug attached to the cylinder head; an auxiliary chamber pipe surrounding the spark plug and protruding downward from the cylinder head; an auxiliary chamber hole formed in the piston, the auxiliary chamber pipe being insertable into the auxiliary chamber hole; and an injector configured to inject a fuel to be supplied into the main chamber. The control unit is configured to: control an ignition timing of the spark plug and an injection amount and an injection timing of the injector; ignite the spark plug when the auxiliary chamber pipe is inserted into the auxiliary chamber hole; and inject the fuel from the injector before the spark plug is ignited and before the auxiliary chamber pipe is inserted into the auxiliary chamber hole.

According to the invention, the control unit may be configured to control the ignition timing such that an in-cylinder pressure peak occurring after the spark plug is ignited occurs at a timing at which an angle formed by a crank radius and a central axis of a connecting rod is 90° or around 90°.

Preferably, the auxiliary chamber pipe may have a constant outer diameter, and the auxiliary chamber hole may have a constant inner diameter larger than the outer diameter of the auxiliary chamber pipe.

According to another illustrative aspect of the present invention, a control method for an internal combustion engine, in which the internal combustion engine includes: a main chamber which is defined by a piston, a cylinder and a cylinder head; a spark plug attached to the cylinder head; an auxiliary chamber pipe surrounding the spark plug and protruding downward from the cylinder head; an auxiliary chamber hole formed in the piston, the auxiliary chamber pipe being insertable into the auxiliary chamber hole; and an injector configured to inject a fuel to be supplied into the main chamber, the control method includes: a first step of injecting the fuel from the injector at a timing before the spark plug is ignited and before the auxiliary chamber pipe is inserted into the auxiliary chamber hole; and a second step of igniting the spark plug when the auxiliary chamber pipe is inserted into the auxiliary chamber hole.

### ADVANTAGEOUS EFFECTS OF INVENTION

According to the present invention, it is possible to provide an engine system and a control method for an internal combustion engine that are advantageous in improving the thermal efficiency of the internal combustion engine.

### BRIEF DESCRIPTION OF DRAWINGS

[FIG. 1] FIG. 1 is a schematic longitudinal sectional diagram showing an engine system.
[FIG. 2] FIG. 2 is a schematic longitudinal sectional diagram showing a state in the vicinity of a spark plug at a timing of a compression top dead center.
[FIG. 3] FIG. 3 is a graph showing a relationship between a crank angle and an in-cylinder pressure.
[FIG. 4] FIG. 4 is a schematic diagram showing a state at an in-cylinder pressure peak occurrence timing in a comparative example.
[FIG. 5] FIG. 5 is a schematic longitudinal sectional diagram showing a state in the vicinity of the spark plug at a timing after the compression top dead center.
[FIG. 6] FIG. 6 is a schematic longitudinal sectional diagram showing a state in the vicinity of the spark plug at a timing further after the timing of FIG. 5.
[FIG. 7] FIG. 7 is a schematic diagram showing a state at an in-cylinder pressure peak occurrence timing according to the present invention.
[FIG. 8] FIG. 8 is a schematic diagram showing a state of a compression stroke in the comparative example.
[FIG. 9] FIG. 9 is a schematic diagram showing a state of a compression stroke in a first example of the present invention.
[FIG. 10] FIG. 10 is a schematic diagram showing a state of a compression stroke in a second example of the present invention.

### DESCRIPTION OF EMBODIMENTS

Hereinafter, an embodiment of the present invention will be described with reference to the accompanying drawings. Incidentally, the present invention is not limited to the following embodiment.

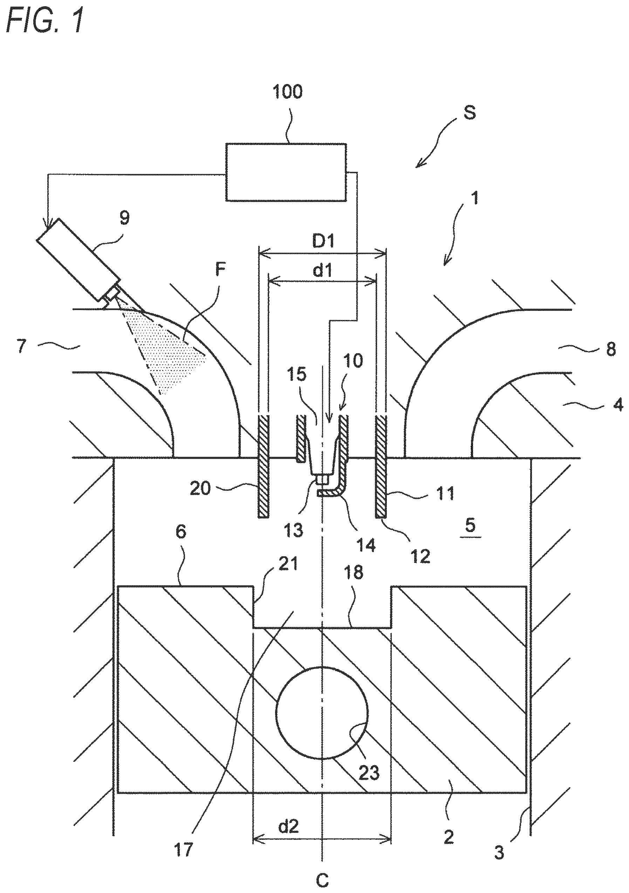

As shown in FIG. 1, an engine system S of the present invention includes an internal combustion engine (engine) 1, and an electronic control unit (ECU) 100 serving as a control unit, a circuit element (circuitry), or a controller configured to control the internal combustion engine 1. As is well known, the ECU 100 includes a CPU (Central Processing Unit) having a calculation function, a ROM (Read Only Memory) and a RAM (Random Access Memory) which are storage media, an input/output port, a storage device other than the ROM and the RAM, and the like.

The engine 1 is a spark-ignition internal combustion engine, and is specifically a gas engine using compressed natural gas (CNG) as a fuel. Incidentally, the engine 1 may be a gasoline engine using gasoline as a fuel, or may be a spark-ignition internal combustion engine using another fuel. The engine 1 of the present invention is used for a vehicle, and is particularly used as a power source of a large vehicle such as a truck. However, the application of the engine is not limited thereto, and the engine may be applied to a moving object other than a vehicle, for example, a ship, a construction machine, or an industrial machine. Further, the engine may not be mounted on the moving object, and may be a stationary engine. Although only one cylinder is shown in FIG. 1, the engine 1 of the present invention is a multi-cylinder engine. The engine 1 includes a turbocharger (not shown).

The engine 1 includes a piston 2, a cylinder 3 in which the piston 2 is vertically movable and coaxially accommodated, a cylinder head 4 that closes an upper end opening of the cylinder 3, and a main combustion chamber, that is, a main chamber 5 defined by the piston 2, the cylinder 3, and the cylinder head 4. The main chamber 5 corresponds to a combustion chamber of a general spark-ignition internal combustion engine.

The cylinder head 4 has an intake port 7 and an exhaust port 8. The intake port 7 and the exhaust port 8 are opened and closed by an intake valve and an exhaust valve, respectively, which are not shown. An injector 9 is provided in the intake port 7. The injector 9 injects a fuel F, which is to be supplied into the main chamber 5 later, into the intake port 7. Therefore, the injector 9 serves as a port injection injector.

The injector may be a direct injection injector that directly injects a fuel into the cylinder 3, or may be a combination of a port injection injector and a direct injection injector. Any type of injector may be used as long as the injector can inject the fuel F to be supplied into the main chamber 5.

A central axis of the cylinder, that is, a cylinder axis, is denoted by C. Hereinafter, unless otherwise specified, an axial direction, a radial direction, and a circumferential direction with respect to the cylinder axis C are simply referred to as an axial direction, a radial direction, and a circumferential direction.

A spark plug 10 and an auxiliary chamber pipe 11 surrounding the spark plug 10 are attached to a central portion of the cylinder head 4 in the radial direction. The spark plug 10 and the auxiliary chamber pipe 11 are disposed coaxially with the cylinder axis C and protrude downward from the cylinder head 4. As is well known, the spark plug 10 includes a center electrode 13, an outer electrode 14, and an insulator 15 interposed between these electrodes.

The auxiliary chamber pipe 11 has a cylindrical shape extending in the axial direction, and surrounds the spark plug 10 with a radial gap therebetween. The auxiliary chamber pipe 11 protrudes from the cylinder head 4 more than the spark plug 10. The auxiliary chamber pipe 11 is formed in a straight pipe shape. The auxiliary chamber pipe 11 has a constant inner diameter d1 and a constant outer diameter D1. A lower end surface 12 of the auxiliary chamber pipe 11 is perpendicular to the axial direction. A lower end of the auxiliary chamber pipe 11 is opened into the main chamber 5.

On the other hand, an auxiliary chamber hole 17, into which the auxiliary chamber pipe 11 can be inserted, is formed in an upper surface 6 of the piston 2. The auxiliary chamber hole 17 has a bottomed cylindrical shape extending in the axial direction. An upper end of the auxiliary chamber hole 17 is opened and a lower end thereof is closed. The auxiliary chamber hole 17 has a constant inner diameter d2. The inner diameter d2 is slightly larger than the outer diameter D1 of the auxiliary chamber pipe 11. A lower end surface of the auxiliary chamber hole 17, that is, a bottom surface 18 is perpendicular to the axial direction.

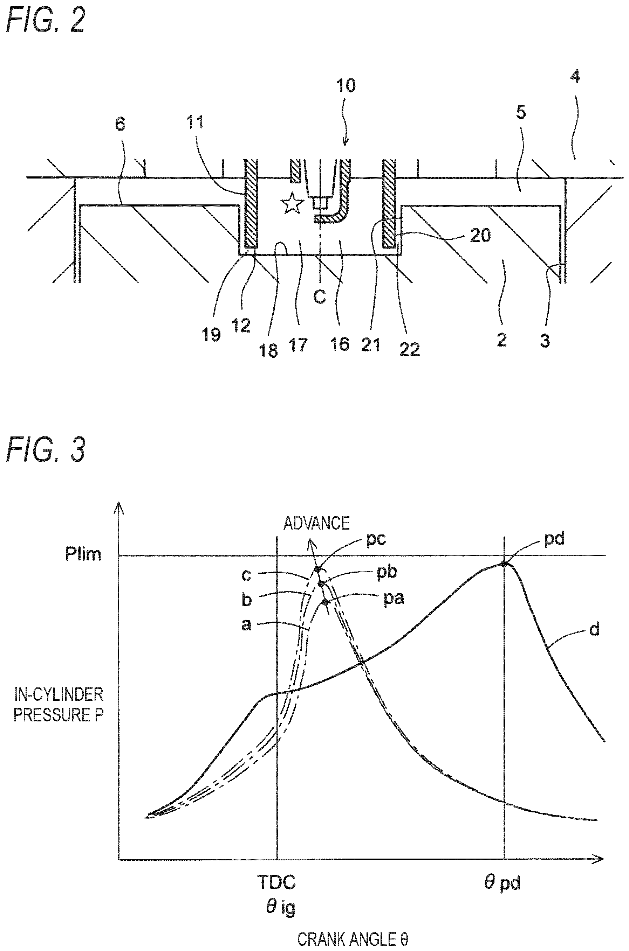

FIG. 2 shows a state at a compression top dead center (TDC). In this state, the auxiliary chamber pipe 11 is inserted into the auxiliary chamber hole 17, and an auxiliary combustion chamber, that is, an auxiliary chamber 16 is formed by the auxiliary chamber pipe 11 and the auxiliary chamber hole 17. The auxiliary chamber 16 is also referred to as a pre-chamber. The auxiliary chamber 16 forms a combustion chamber having a smaller volume than the main chamber 5. FIG. 2 shows a state in which the auxiliary chamber pipe 11 is inserted into the auxiliary chamber hole 17 at a maximum and a volume of the auxiliary chamber 16 is minimized. When the auxiliary chamber pipe 11 is inserted, an axial gap (which is referred to as a bottom gap) 19 is formed between the lower end surface 12 of the auxiliary chamber pipe 11 and the bottom surface 18 of the auxiliary chamber hole 17, and a radial gap (referred to as a circumferential gap) 22 is formed between an outer circumferential surface 20 of the auxiliary chamber pipe 11 and an inner circumferential surface 21 of the auxiliary chamber hole 17.

Returning to FIG. 1, a piston pin hole 23 is provided in the piston 2 at a position below the auxiliary chamber hole 17. As is well known, a piston pin (not shown) is inserted into the piston pin hole 23, and the piston 2 and a small end portion of a connecting rod (not shown) are connected to each other via the piston pin.

The ECU 100 is configured to control an ignition timing of the spark plug 10, and an injection amount and an injection timing of the injector 9. Hereinafter, the control method will be described.

First, a case of a general spark-ignition internal combustion engine (referred to as a comparative example), which is different from the present embodiment, will be described. In the comparative example, the auxiliary chamber is not provided, and the spark plug is disposed in a central portion of the main chamber. When the spark plug is ignited, an air-fuel mixture in the main chamber burns and spreads radially outward from an ignition position. In the comparative example, a port injection injector is also provided, and an injection timing is during an intake stroke or before an intake stroke.

FIG. 3 shows a relationship between a crank angle θ and an in-cylinder pressure P. The in-cylinder pressure as used herein means a pressure in the main chamber. Lines a, b, and c represent a case in the comparative example, and the ignition timing is advanced as the lines a, b, and c are advanced. For example, the ignition timing in the case of the line a is 10° before the compression top dead center (BTDC (Before Top Dead Center) 10°), the ignition timing in the case of the line b is 15° before the compression top dead center (BTDC 15°), and the ignition timing in the case of the line c is 20° before the compression top dead center (BTDC 20°).

Plim in the figure indicates a maximum value of the in-cylinder pressure at which knocking does not occur in a case of the comparative example and the present embodiment, that is, a knock limit. A compression ratio of the engine in the comparative example is a predetermined general value (for example, 10.0), and the compression ratio is referred to as a reference compression ratio.

As shown in the figure, in the comparative example, a maximum peak of the in-cylinder pressure, that is, the in-cylinder pressure peak (indicated by pa, pb, pc) occurs at a timing immediately after the compression top dead center (for example, close to 15° after top dead center (ATDC)). Then, as the ignition timing is advanced, an in-cylinder pressure value of the in-cylinder pressure peak (in-cylinder pressure peak value) increases, approaches the knock limit Plim, and the ignition timing is advanced to a timing at which the in-cylinder pressure peak occurs.

However, a timing immediately after the compression top dead center at which the in-cylinder pressure peak occurs is a timing at which the mechanical efficiency at the time of converting the in-cylinder pressure into a torque of a crankshaft is not necessarily good.

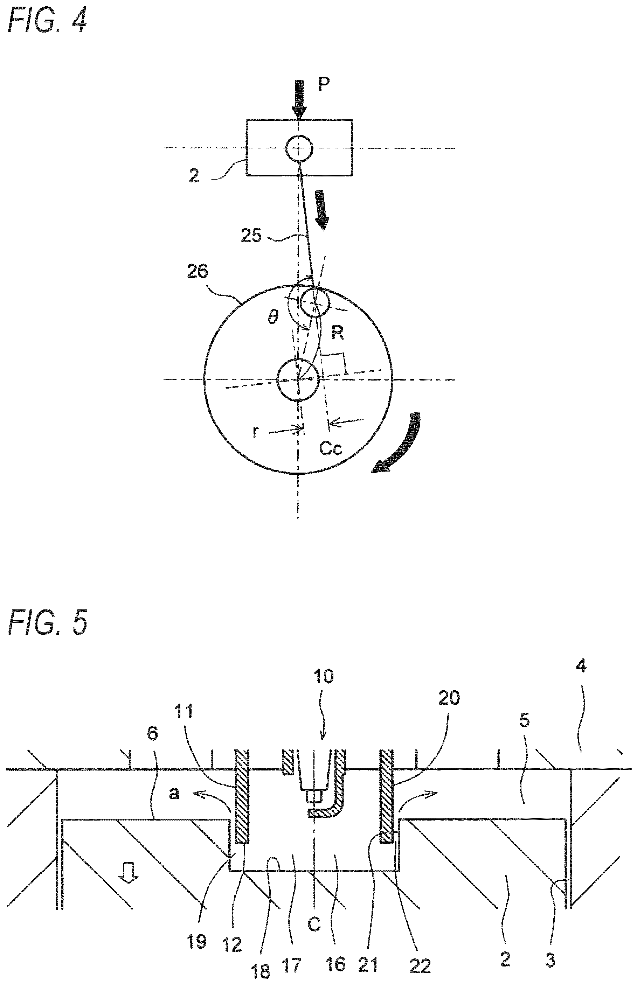

FIG. 4 shows positions of the piston 2, a connecting rod 25, and a crankshaft 26 at an in-cylinder pressure peak occurrence timing. The in-cylinder pressure P generates a downward force with respect to the piston 2, and the force is transmitted to the crankshaft 26 through the connecting rod 25 and is converted into a torque for rotating the crankshaft 26. However, at this timing, the angle θ formed by a crank radius R connecting a center of the crankshaft and a center of a crankpin and a central axis Cc of the connecting rod is considerably larger than 90° and is close to 180°. Therefore, an arm length r at the time of calculating a moment of the force applied to the crankshaft 26 is considerably shorter than the crank radius R, and even if a large in-cylinder pressure P is applied, the crankshaft 26 does not receive a very large torque. Therefore, the mechanical efficiency at the time of converting the in-cylinder pressure into the torque of the crankshaft (hereinafter, simply referred to as "mechanical efficiency") is not necessarily good.

As shown in FIG. 3, even if the ignition timing is advanced to increase the in-cylinder pressure peak value, the in-cylinder pressure peak occurrence timing does not change so much, but is rather advanced, so that the angle θ increases and the arm length r changes in a direction of getting shorter. Therefore, a rate of increase in torque relative to an advance amount is not so large, and even if the ignition timing is advanced, the torque does not increase so much, making it difficult to improve the thermal efficiency of the engine.

Therefore, in the present invention, in order to solve this problem, the engine having the above-described configuration is adopted, and the following control is performed.

In FIG. 3, a line d indicates a case of the present invention. The ignition timing of the present invention is a timing at which the auxiliary chamber 16 is formed by inserting the auxiliary chamber pipe 11 into the auxiliary chamber hole 17. Specifically, the ignition timing is near the compression top dead center and preferably, is equal to or after the compression top dead center, but the ignition timing may be before the compression top dead center. In any case, the timing is preferably later than that of the comparative example.

FIG. 3 shows, as an example, an ignition timing θig of the present invention that is equal to the compression top dead center (TDC). Before the ignition timing θig, an in-cylinder air-fuel mixture does not self-ignite. Therefore, before the ignition timing θig, the in-cylinder pressure increases as during motoring. When ignition is performed at the ignition timing θig, the in-cylinder air-fuel mixture is ignited and combusted, and the in-cylinder pressure gradually increases.

As indicated by a star in FIG. 2, when ignition is performed at the compression top dead center, the air-fuel mixture in the auxiliary chamber 16 is ignited and combusted (this is referred to as auxiliary combustion). A resulting flame or flame kernel diffuses radially from an entire circumference into the main chamber 5 through the bottom gap 19 and the circumferential gap 22, propagates into the main chamber 5, and burns the air-fuel mixture in the main chamber 5.

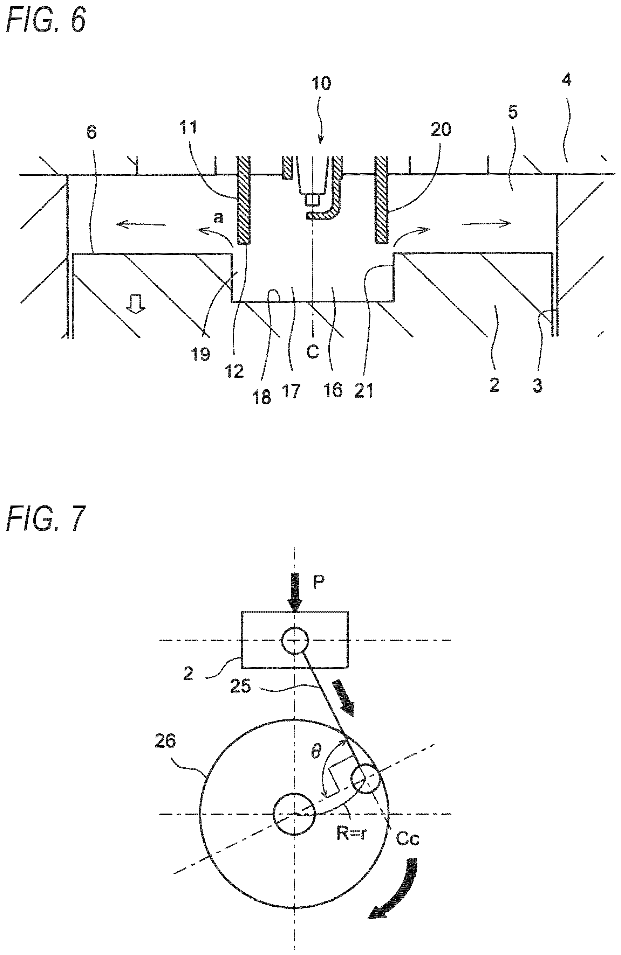

After the ignition, the piston 2 gradually descends as shown in FIG. 5, and the flame in the auxiliary chamber 16 propagates into the main chamber 5 through the bottom gap 19 and the circumferential gap 22 as shown by arrows a. As the piston 2 descends, the bottom gap 19 gradually increases, but a size of the circumferential gap 22 is substantially constant. The flame in the auxiliary chamber 16 propagates relatively slowly into the main chamber 5 through the circumferential gap 22 functioning as a restrictor. As shown in FIG. 6, after the auxiliary chamber pipe 11 is removed from the auxiliary chamber hole 17 and the auxiliary chamber 16 is opened, the flame in the auxiliary chamber 16 directly propagates into the main chamber 5.

As described above, flame propagation from the auxiliary chamber 16 to the main chamber 5 can be delayed, and a burn angle after the ignition can be extended. Then, as shown in FIG. 3, the in-cylinder pressure can be slowly increased after the ignition to delay the in-cylinder pressure peak occurrence timing, and a relatively high in-cylinder pressure can be maintained for a long time.

Preferably, the ignition timing θig is controlled such that a peak timing θpd at which an in-cylinder pressure peak pd occurs coincides with a timing at which the mechanical efficiency is maximized or is near the timing.

FIG. 7 shows positions of the piston 2, the connecting rod 25, and the crankshaft 26 at a timing at which the mechanical efficiency is maximized (which will be referred to as a maximum mechanical efficiency timing). At this timing, the angle θ formed by the crank radius R and the central axis Cc of the connecting rod is equal to 90°. Therefore, the arm length r at the time of calculating the moment of the force applied to the crankshaft 26 is equal to the crank radius R, and the mechanical efficiency is maximized. Therefore, the thermal efficiency of the engine can be improved by controlling the ignition timing θig such that the in-cylinder pressure peak pd occurs at or near the maximum mechanical efficiency timing.

In this way, the ECU 100 controls the ignition timing θig such that the in-cylinder pressure peak pd occurs at a timing at which the angle θ formed by the crank radius R and the central axis Cc of the connecting rod is 90° or around 90°. The timing is, for example, a timing within a range of 10° to 80° after the compression top dead center, and more preferably a timing within a range of 45° to 80°. For example, in an engine with a connecting rod ratio of 3.1, a timing of 70° after the compression top dead center can be exemplified.

On the other hand, regarding fuel injection control, the ECU 100 causes the injector 9 to inject the fuel before the ignition of the spark plug 10 and before the auxiliary chamber pipe 11 is inserted into the auxiliary chamber hole 17. As a result, the air-fuel mixture can be formed in the auxiliary chamber 16 and can be reliably ignited. At this time, the ECU 100 causes the injector 9 to inject the fuel in such an amount that the air-fuel mixture in the main chamber 5 and the auxiliary chamber 16 does not self-ignite before the ignition of the spark plug 10. The amount that does not cause self-ignition refers to, for example, an amount that does not cause self-ignition during high-load operation in an engine with a high compression ratio (compression ratio ε of 15 or more), poor cooling efficiency, and a shape that easily creates heat spots in a combustion chamber.

A fuel injection timing is during an intake stroke or before an intake stroke (for example, during an exhaust stroke) as in the comparative example. Incidentally, in a case where the injector is a direct injection injector, the fuel injection timing can be set to a timing during the intake stroke or the compression stroke. The fuel injection amount can be set to an amount smaller than an amount corresponding to a stoichiometric air-fuel ratio.

In order to improve the thermal efficiency of the engine, it is advantageous to increase the compression ratio. However, if the compression ratio is excessively high, knocking may occur. Therefore, as described above, the auxiliary chamber pipe 11 is inserted into the auxiliary chamber hole 17 to form the auxiliary chamber 16. Therefore, a compression ratio of the auxiliary chamber 16 can be made substantially lower than a compression ratio of the main chamber 5, and knocking due to a high compression ratio can be suppressed.

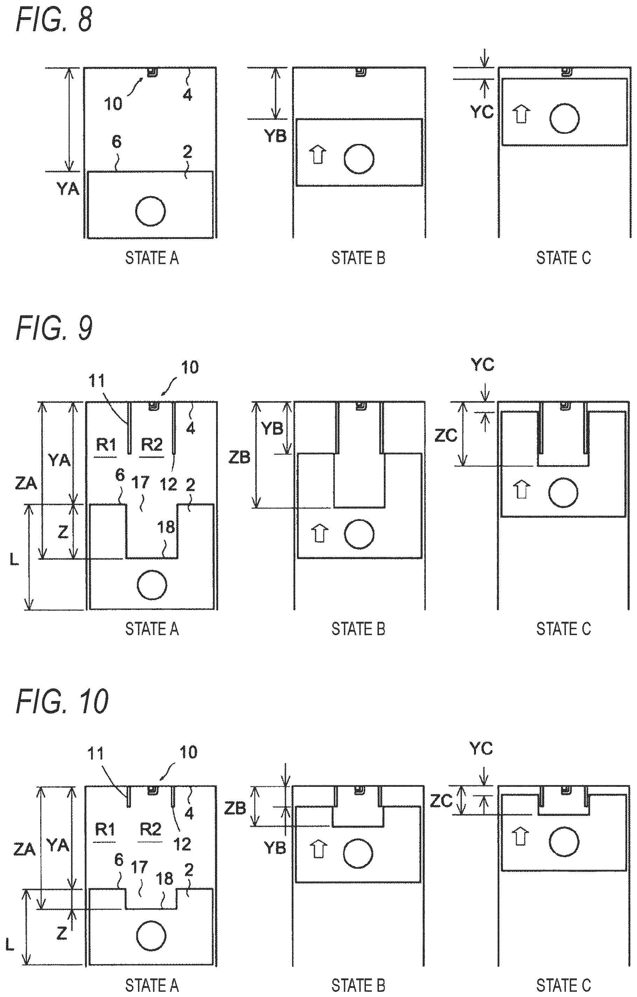

FIG. 8 shows a case of the comparative example, and FIGS. 9 and 10 show a case of the present embodiment. In each of the figures, a state A indicates a state at a compression bottom dead center, a state C indicates a state at the compression top dead center, and a state B indicates a state at an intermediate timing therebetween.

First, in the comparative example shown in FIG. 8, neither the auxiliary chamber pipe 11 nor the auxiliary chamber hole 17 is provided. Each of YA, YB, and YC is a distance from the cylinder head 4 to a piston upper surface 6. YA = 10YC, and YB = 5YC = 1/2YA. For convenience, the compression ratio ε can be considered as ε = 1 in the state A, ε = 2 in the state B, and ε = 10 in the state C.

Next, a first example of the present embodiment shown in FIG. 9 will be described. A relationship among YA, YB, and YC is YA = 10YC and YB = 5YC = 1/2YA as described above. On the other hand, each of ZA, ZB, and ZC is a distance from the cylinder head 4 to the bottom surface 18 of the auxiliary chamber hole. ZA = 15YC, ZB = 10YC, and ZC = 6YC. A depth Z of the auxiliary chamber hole 17 is 5YC.

The main chamber 5 is divided into a radially outer main chamber region R1 located directly above the piston upper surface 6, and a radially inner auxiliary chamber region R2 located directly above the bottom surface 18 of the auxiliary chamber hole. In the state A, compression ratios of the main chamber region R1 and the auxiliary chamber region R2 are both ε = 1.

In the state B, the lower end surface 12 of the auxiliary chamber pipe 11 is at the same height position as the piston upper surface 6, and a timing comes at which the auxiliary chamber pipe 11 just starts to be inserted into the auxiliary chamber hole 17. At this time, the compression ratios of the main chamber region R1 and the auxiliary chamber region R2 are equal to each other, and are both ε = 2.

Thereafter, since the auxiliary chamber pipe 11 is inserted into the auxiliary chamber hole 17, the auxiliary chamber 16 is substantially separated from the main chamber 5. Then, both the chambers are individually compressed.

In the state C, the compression ratio of the main chamber region R1, that is, the main chamber 5 is ε = 10 as in the comparative example. On the other hand, since compression of the auxiliary chamber region R2, that is, the auxiliary chamber 16 is substantially started from the state B, the compression ratio of the auxiliary chamber region R2 is ε = 2 × (ZB/ZC) = 3.33. Therefore, the compression ratio of the auxiliary chamber 16 can be made lower than the compression ratio of the main chamber 5, and knocking due to a high compression ratio can be suppressed.

In the first example shown in FIG. 9, although the compression ratio of the auxiliary chamber 16 can be made greatly lower than the compression ratio of the main chamber 5, the depth Z of the auxiliary chamber hole 17 is increased and a length L of the piston 2 is increased, which may not be preferable in terms of engine packaging.

Therefore, a second example of the present embodiment shown in FIG. 10 addresses this problem. The second example will be described below.

As above, YA = 10YC. However, for YB, unlike the first example, YB = 2YC = 1/5YA. On the other hand, the distances from the cylinder head 4 to the bottom surface 18 of the auxiliary chamber hole are ZA = 12YC, ZB = 4YC, and ZC = 3YC. The depth Z of the auxiliary chamber hole 17 is 2YC.

In this case, in the state A, the compression ratios of the main chamber region R1 and the auxiliary chamber region R2 are both ε = 1.

In the state B of FIG. 10, similarly to the state B of FIG. 9, a timing comes at which the auxiliary chamber pipe 11 just starts to be inserted into the auxiliary chamber hole 17. At this time, the compression ratios of the main chamber region R1 and the auxiliary chamber region R2 are equal to each other, and are both ε = 5.

In the state C, the compression ratio of the main chamber 5 is ε = 10 as in the comparative example. On the other hand, the compression ratio of the auxiliary chamber 16 is ε = 5 × (ZB/ZC) = 6.66. Therefore, the compression ratio of the auxiliary chamber 16 can be made lower than the compression ratio of the main chamber 5, and knocking due to a high compression ratio can be suppressed.

In the present example, as compared with the first example shown in FIG. 9, although the amount of decrease in the compression ratio of the auxiliary chamber 16 with respect to the compression ratio of the main chamber 5 is small, the depth Z of the auxiliary chamber hole 17 can be reduced and the length L of the piston 2 can be shortened. Therefore, preferable engine packaging can be realized.

According to the present invention, the compression ratio of the auxiliary chamber 16 can be made lower than the compression ratio of the main chamber 5. In this way, knocking can be suppressed, and ignition energy in the spark plug 10 (specifically, an ignition coil secondary voltage applied to the spark plug 10) can be reduced. This is because the low compression ratio has a lower gas density. Further, due to the decrease in the ignition energy, a flame kernel growth rate immediately after ignition in the auxiliary chamber 16 can be reduced. When the flame kernel growth rate is reduced, the flame propagation from the auxiliary chamber 16 to the main chamber 5 and further the flame propagation in the main chamber 5 can be delayed accordingly. Therefore, it is advantageous to bring the in-cylinder pressure peak occurrence timing θpd close to the maximum mechanical efficiency timing.

Further, as shown in FIGS. 2 and 5, after the ignition, as the piston 2 descends, the flame in the auxiliary chamber 16 propagates into the main chamber 5 through the circumferential gap 22. The size of the circumferential gap 22 is set to a minimum gap such that an inner surface of the auxiliary chamber hole 17 does not collide with the auxiliary chamber pipe 11 even when the piston 2 swings. Therefore, the flame in the auxiliary chamber 16 propagates slowly into the main chamber 5 through the circumferential gap 22, which is advantageous in bringing the in-cylinder pressure peak occurrence timing θpd close to the maximum mechanical efficiency timing.

Since the outer diameter D1 of the auxiliary chamber pipe 11 and the inner diameter d2 of the auxiliary chamber hole 17 are constant, the size of the circumferential gap 22 after ignition and during descending of the piston can be kept substantially constant at such a small value as described above. Therefore, a flame propagation speed from the auxiliary chamber 16 to the main chamber 5 can be kept low until the auxiliary chamber pipe 11 is removed from the auxiliary chamber hole 17.

Incidentally, in FIG. 9, for example, when the compression is performed from the state B to the state C, there is compression leakage from the auxiliary chamber 16 through the circumferential gap 22, and thus an actual compression ratio may not be the one described above. However, since the actual compression is performed at high speed, the compression ratio calculated as described above is appropriate to some extent.

Further, even if the in-cylinder pressure peak value of the present embodiment is lower than that of the comparative example, since the in-cylinder pressure peak pd occurs at or near the maximum mechanical efficiency timing in the present embodiment, the generated engine torque, that is, the thermal efficiency of the engine, can be improved as compared with that in the comparative example.

Incidentally, the ignition timing θig does not necessarily have to be an ignition timing at which the peak timing θpd coincides with or near the maximum mechanical efficiency timing, and the peak timing θpd may be an ignition timing before or near the maximum mechanical efficiency timing. In this case, the peak timing θpd can still also be brought closer to the maximum mechanical efficiency timing than in the comparative example, which is advantageous in improving the thermal efficiency.

As described above, according to the present invention, it is possible to provide the engine system and the control method for the internal combustion engine, which are advantageous in improving the thermal efficiency of the internal combustion engine.

Although the present invention has been described in detail above, the present invention can also be applied to other embodiments and modifications.
(1) For example, each of cross-sectional shapes of the auxiliary chamber pipe 11 and the auxiliary chamber hole 17 perpendicular to the axial direction may be a shape other than a circular shape, and may be, for example, an elliptical shape or a polygonal shape such as a quadrangular shape.
(2) The values of the compression ratios shown in the examples of FIGS. 8 to 10 are examples. The values can be freely changed.

The present application is based on Japanese Patent Application No. 2020-135842 filed on August 11, 2020.

### INDUSTRIAL APPLICABILITY

The engine system and the control method for the internal combustion engine according to the present disclosure are advantageous in improving the thermal efficiency of the internal combustion engine.

### REFERENCE SIGNS LIST

1: Internal combustion engine (engine)
2: Piston
3: Cylinder
4: Cylinder head
5: Main chamber
9: Injector
10: Spark plug
11: Auxiliary chamber pipe
17: Auxiliary chamber hole
100: Electronic control unit (ECU)

## Claims

1. An engine system comprising:
an internal combustion engine (1); and
a control unit (100),
wherein the internal combustion engine (1) comprises:
a main chamber (5) defined by a piston (2), a cylinder (3) and a cylinder head (4);
a spark plug (10) attached to the cylinder head (4);
an auxiliary chamber pipe (11) surrounding the spark plug (10) and protruding downward from the cylinder head (4);
an auxiliary chamber hole (17) formed in the piston (2), the auxiliary chamber pipe (11) being insertable into the auxiliary chamber hole (17); and
an injector (9) configured to inject a fuel to be supplied into the main chamber (5), and
wherein the control unit (100) is configured to:
control an ignition timing of the spark plug (10) and an injection amount and an injection timing of the injector (9);
ignite the spark plug (10) when the auxiliary chamber pipe (11) is inserted into the auxiliary chamber hole (17); and
inject the fuel from the injector (9) before the spark plug (10) is ignited and before the auxiliary chamber pipe is inserted into the auxiliary chamber hole (17), and wherein the control unit (100) is configured to control the ignition timing such that an in-cylinder pressure peak occurring after the spark plug (10) is ignited occurs at a timing at which an angle formed by a crank radius and a central axis of a connecting rod (25) is 90° or around 90°.

2. The engine system according to claim 1,
wherein the auxiliary chamber pipe (11) has a constant outer diameter, and
wherein the auxiliary chamber hole (17) has a constant inner diameter larger than the outer diameter of the auxiliary chamber pipe (11).

3. A control method for an internal combustion engine (1),
the internal combustion engine (1) comprising:
a main chamber (5) which is defined by a piston (2), a cylinder (3) and a cylinder head (4);
a spark plug (10) attached to the cylinder head (4);
an auxiliary chamber pipe (11) surrounding the spark plug (10) and protruding downward from the cylinder head (4);
an auxiliary chamber hole (17) formed in the piston (2), the auxiliary chamber pipe (11) being insertable into the auxiliary chamber hole (17); and
an injector (9) configured to inject a fuel to be supplied into the main chamber (5),
the control method comprising:
a first step of injecting the fuel from the injector (9) at a timing before the spark plug (10) is ignited and before the auxiliary chamber pipe (11) is inserted into the auxiliary chamber hole (17); and
a second step of igniting the spark plug (10) when the auxiliary chamber pipe (11) is inserted into the auxiliary chamber hole (17),
wherein the ignition timing is controlled such that an in-cylinder pressure peak occurring after the spark plug (10) is ignited occurs at a timing at which an angle formed by a crank radius and a central axis of a connecting rod (25) is 90° or around 90°.

## Patentansprüche

1. Motorsystem, umfassend:
einen Verbrennungsmotor (1); und
eine Steuereinheit (100),
wobei der Verbrennungsmotor (1) umfasst:
eine Hauptkammer (5), die durch einen Kolben (2), einen Zylinder (3) und einen Zylinderkopf (4) definiert wird;
eine Zündkerze (10), die an dem Zylinderkopf (4) befestigt ist;
ein Hilfskammerrohr (11), das die Zündkerze (10) umgibt und nach unten aus dem Zylinderkopf (4) herausragt;
ein in dem Kolben (2) ausgebildetes Hilfskammerloch (17), wobei das Hilfskammerrohr (11) in das Hilfskammerloch (17) einführbar ist; und
eine Einspritzdüse (9), die dazu konfiguriert ist, einen in die Hauptkammer (5) zuzuführenden Kraftstoff einzuspritzen, und
wobei die Steuereinheit (100) konfiguriert ist, zum:
Steuern eines Zündzeitpunkts der Zündkerze (10) und einer Einspritzmenge und eines Einspritzzeitpunkts der Einspritzdüse (9);
Zünden der Zündkerze (10), wenn das Hilfskammerrohr (11) in die Hilfskammeröffnung (17) eingeführt ist; und
Einspritzen des Kraftstoffs aus der Einspritzdüse (9), bevor die Zündkerze (10) gezündet wird und bevor das Hilfskammerrohr in die Hilfskammeröffnung (17) eingeführt wird, und wobei die Steuereinheit (100) dazu konfiguriert ist, den Zündzeitpunkt derart zu steuern, dass ein Zylinderdruckspitzenwert, der nach der Zündung der Zündkerze (10) auftritt, zu einem Zeitpunkt auftritt, zu dem ein Winkel, der durch einen Kurbelradius und eine Mittelachse einer Pleuelstange (25) ausgebildet wird, 90° oder etwa 90° beträgt.

2. Motorsystem nach Anspruch 1,
wobei das Hilfskammerrohr (11) einen konstanten Außendurchmesser aufweist und
wobei die Hilfskammeröffnung (17) einen konstanten Innendurchmesser aufweist, der größer ist als der Außendurchmesser des Hilfskammerrohrs (11).

3. Steuerverfahren eines Verbrennungsmotors (1),
wobei der Verbrennungsmotor (1) umfasst:
eine Hauptkammer (5), die durch einen Kolben (2), einen Zylinder (3) und einen Zylinderkopf (4) definiert wird;
eine Zündkerze (10), die an dem Zylinderkopf (4) befestigt ist;
ein Hilfskammerrohr (11), das die Zündkerze (10) umgibt und nach unten aus dem Zylinderkopf (4) herausragt;
ein in dem Kolben (2) ausgebildetes Hilfskammerloch (17), wobei das Hilfskammerrohr (11) in das Hilfskammerloch (17) einführbar ist; und
eine Einspritzdüse (9), die dazu konfiguriert ist, einen in die Hauptkammer (5) zuzuführenden Kraftstoff einzuspritzen,
wobei das Steuerverfahren umfasst:
einen ersten Schritt des Einspritzens des Kraftstoffs aus der Einspritzdüse (9) zu einem Zeitpunkt, bevor die Zündkerze (10) gezündet wird und bevor das Hilfskammerrohr (11) in die Hilfskammeröffnung (17) eingeführt wird; und
einen zweiten Schritt des Zündens der Zündkerze (10), wenn das Hilfskammerrohr (11) in die Hilfskammeröffnung (17) eingeführt ist,
wobei der Zündzeitpunkt derart gesteuert wird, dass ein Zylinderdruckspitzenwert, der nach der Zündung der Zündkerze (10) auftritt, zu einem Zeitpunkt auftritt, zu dem ein Winkel, der durch einen Kurbelradius und eine Mittelachse einer Pleuelstange (25) ausgebildet wird, 90° oder etwa 90° beträgt.

## Revendications

1. Système de moteur comprenant :
un moteur à combustion interne (1) ; et
une unité de commande (100),
dans lequel le moteur à combustion interne (1) comprend :
une chambre principale (5) définie par un piston (2), un cylindre (3) et une culasse (4) ;
une bougie d'allumage (10) fixée à la culasse (4) ;
un tuyau de chambre auxiliaire (11) entourant la bougie d'allumage (10) et faisant saillie vers le bas à partir de la culasse (4) ;
un trou de chambre auxiliaire (17) formé dans le piston (2), le tuyau de chambre auxiliaire (11) pouvant être inséré dans le trou de chambre auxiliaire (17) ; et
un injecteur (9) configuré pour injecter un carburant à fournir à la chambre principale (5), et
dans lequel l'unité de commande (100) est configurée pour :
commander un minutage d'allumage de la bougie d'allumage (10) et une quantité d'injection et un minutage d'injection de l'injecteur (9) ;
allumer la bougie d'allumage (10) lorsque le tuyau de chambre auxiliaire (11) est inséré dans le trou de chambre auxiliaire (17) ; et
injecter le carburant à partir de l'injecteur (9) avant l'allumage de la bougie d'allumage (10) et avant l'insertion du tuyau de chambre auxiliaire dans le trou de chambre auxiliaire (17), et dans lequel l'unité de commande (100) est configurée pour commander le minutage d'allumage de telle sorte qu'un pic de pression dans le cylindre survenant après l'allumage de la bougie d'allumage (10) survient à un minutage auquel un angle formé par un rayon de vilebrequin et un axe central d'une bielle (25) est de 90° ou d'environ 90°.

2. Système de moteur selon la revendication 1,
dans lequel le tuyau de chambre auxiliaire (11) a un diamètre externe constant, et
dans lequel le trou de chambre auxiliaire (17) a un diamètre interne constant plus grand que le diamètre externe du tuyau de chambre auxiliaire (11).

3. Procédé de commande pour un moteur à combustion interne (1),
le moteur à combustion interne (1) comprenant :
une chambre principale (5) qui est définie par un piston (2), un cylindre (3) et une culasse (4) ;
une bougie d'allumage (10) fixée à la culasse (4) ;
un tuyau de chambre auxiliaire (11) entourant la bougie d'allumage (10) et faisant saillie vers le bas à partir de la culasse (4) ;
un trou de chambre auxiliaire (17) formé dans le piston (2), le tuyau de chambre auxiliaire (11) pouvant être inséré dans le trou de chambre auxiliaire (17) ; et
un injecteur (9) configuré pour injecter un carburant à fournir à la chambre principale (5), et
le procédé de commande comprenant :
une première étape consistant à injecter le carburant à partir de l'injecteur (9) à un minutage avant l'allumage de la bougie d'allumage (10) et avant l'insertion du tuyau de chambre auxiliaire (11) dans le trou de chambre auxiliaire (17) ; et
une deuxième étape consistant à allumer la bougie d'allumage (10) lorsque le tuyau de chambre auxiliaire (11) est inséré dans le trou de chambre auxiliaire (17),
dans lequel le minutage d'allumage est commandé de telle sorte qu'un pic de pression dans le cylindre survenant après l'allumage de la bougie d'allumage (10) survient à un minutage auquel un angle formé par un rayon de vilebrequin et un axe central d'une bielle (25) est de 90° ou d'environ 90°.
